# EUROPEAN PATENT APPLICATION

(11) **EP 3 127 635 A1**
(43) Date of publication of application: **08.02.2017**
(21) Application number: 15180029.9
(22) Date of filing: 06.08.2015
(51) Int. Cl.: B22F 3/105, B28B 1/00

(54) **ADDITIVE MANUFACTURING OF DOWN-SKIN LAYERS**

(71) Applicant: TRUMPF Laser-und Systemtechnik GmbH, 71254 Ditzingen (DE); Trumpf Sisma S.r.l., 36013 Piovene Rocchette (VI) (IT)
(72) Inventor: WÜST, Frank Peter, 71083 Herrenberg (DE); BAUER, Johannes, 75428 Illingen (DE); RIVA, Fausto, 36010 Zanè (VI) (IT); BASTIANELLO, Federico, 35010 Trebaseleghe (PD) (IT); BERNARDI, Adriano, 36036 Torrebelvicino (VI) (IT); THIELMANN, Michael, 71665 Vaihingen an der Enz (DE)
(74) Representative: Kramer Barske Schmidtchen Patentanwälte PartG mbB

(57) **Abstract**

A method for radiation based additive manufacturing of a three-dimensional object (1) from powdered material (27) is disclosed, wherein a plurality of layers (N-1, N, N+1, N+2) of the powdered material (27) are provided in a layer providing direction (Z) and are irradiated layer by layer, and the plurality of layers (N-1, N, N+1, N+2) comprises an overhang layer (N, N+1, N+2) with a core region (9) and a down-skin region (11) for forming a core portion (3) and an overhang portion (5) of the manufactured three-dimensional object (1), respectively, the core region (9) extending in the layer providing direction (Z) on top of an irradiated region of a directly preceding layer (N-1, N, N+1) and the down-skin region (11) extending on top of a previously nonirradiated region of the directly preceding layer (N-1, N, N+1). The method comprises generating the directly preceding layer (N-1, N, N+1) of the overhang layer (N, N+1, N+2), and generating the overhang layer (N, N+1, N+2) by providing a core energy density into the core region (9) at least up to a preset distance from a transition (7) to the down-skin region (11), and providing a slope depending overhang energy density into down-skin micro-regions (69) of the down-skin region (11), wherein the slope depending overhang energy density differs from the core energy density by a down-skin reduction that depends on an extent (15) of the respective down-skin micro-region beyond the respective core region (9) of the directly preceding layer (N-1, N, N+1).

## Description

### Technical Field

The present disclosure relates generally to additive manufacturing and more particularly to controlling additive manufacturing of down-skin layers.

### Background

In additive manufacturing such as selective laser sintering or selective laser melting, a powdered material such as a metal or ceramic powder is irradiated with electromagnetic radiation such as laser light. Successively, thin layers of powder are provided within the chamber on a build platform to form the three-dimensional object in a stepwise production layer by layer, i.e. in a layer providing direction. An exemplary device for additive manufacturing is disclosed in EP 2 732 890 A2.

In general, the radiated region may laterally shift such that layers may form - in the layer providing direction - an overhang e.g. in a sequence of layers, herein referred to as overhang layers. An overhang layer comprises a core region for forming a core portion and a down-skin region for forming an overhang portion of the three-dimensional object. A core region generally extends in the layer providing direction on top of an irradiated region of a layer being generated directly before. Down-skin regions extend on top of a previously non-irradiated regions of the directly preceding layer, respectively.

An exemplary method for additive manufacturing of down-skin layers is disclosed, for example, in EP 1 720 676 B1.

In general, the formation of overhang layers and their shape are influenced by the missing support of the preceding layer in the overhang region. Accordingly, additive manufacturing of overhang regions may result in respective overhang portions of the three-dimensional object that may not fulfill the desired specifications such as shape precision, stability, and structure in general.

The present disclosure is directed, at least in part, to improving or overcoming one or more aspects of prior systems, and in particular to provide an efficient approach for forming down-skin layers.

### Summary of the Disclosure

Some of the objects may be achieved by a method for radiation based additive manufacturing of a three-dimensional object as recited in claim 1, a method for generating an irradiation instruction map for additive manufacturing of a three-dimensional object as recited in claim 10. Furthermore, some of the objects may be addressed by a three-dimensional object as recited in claim 1, a digital 3D printable item as recited in claim 13, a computer-readable program product as recited in claim 14, and a device for additive manufacturing of three-dimensional objects as recited in claim 15. Further aspects and developments are given in the dependent claims.

In a first aspect, the present disclosure discloses a method for radiation based additive manufacturing of a three-dimensional object from powdered material, wherein a plurality of layers of the powdered material are provided in a layer providing direction and are irradiated layer by layer, and the plurality of layers comprises an overhang layer with a core region and a down-skin region for forming a core portion and an overhang portion of the manufactured three-dimensional object, respectively, the core region extending in the layer providing direction on top of an irradiated region of a directly preceding layer and the down-skin region extending on top of a previously non-irradiated region of the directly preceding layer. The method comprises generating the directly preceding layer of the overhang layer, and generating the overhang layer by providing a core energy density into the core region at least up to a preset distance from a transition to the down-skin region, and providing a slope depending overhang energy density into down-skin micro-regions of the down-skin region, wherein the slope depending overhang energy density differs from the core energy density by a down-skin reduction that depends on an extent of the respective down-skin micro-region beyond the respective core region of the directly preceding layer.

In another aspect, a method for generating an irradiation instruction map for additive manufacturing of a three-dimensional object from powdered material comprising an overhang portion comprises determining a core region and a down-skin layer region of an object layer data corresponding to the three-dimensional object, the down-skin layer region comprising at least one down-skin micro-region, determining an extent of the down-skin micro-region beyond the respective core region of a directly preceding layer, associating a core energy density to the core region, and associating a slope depending overhang energy density to the down-skin micro-region that differs from the core energy density by a down-skin reduction that depends on the extent determined for the respective down-skin micro-region.

In another aspect, a three-dimensional object formed from powdered material comprises a core portion having a core material structure with a core density, in particular a core density in the range of completely processed such as melted/sintered powdered material, and an overhang portion comprising, at an overhang side, a down-skin material structure, wherein the down-skin material structure forms a surface of the three-dimensional object at the overhang side and has a second density at the overhang side that is reduced with respect to the core density and changes with the slope of the overhang side.

In another aspect, a digital 3D printable item for being processed by a 3D manufacturing device comprises a data set representing a 3D structure of a three-dimensional object to be formed from powdered material layer by layer by the 3D manufacturing device in a layer providing direction, and energy density parameters associated with the data set and the specific layer providing direction for setting an irradiated energy density of the 3D manufacturing device. The energy density parameters comprise for data points of the data set that are associated with a core region of an overhang layer, core energy density parameters, and for data points of the data set that are associated with a down-skin region of the overhang layer, slope depending overhang energy density parameters, wherein the slope depending overhang energy density parameters correspond to a to be provided energy density that is reduced by a down-skin reduction in comparison to a core energy to be provided at data points having at least a preset distance from a transition from the core region to the down-skin region, wherein the down-skin reduction depends on an extent of a respective down-skin micro-region beyond a respective core region of a directly preceding layer.

In another aspect, a computer-readable program product, having computer readable instructions stored thereon that, responsive to execution by a control unit of a 3D manufacturing device, cause the 3D manufacturing device to perform the method as disclosed herein, and wherein the computer-readable program product has in particular stored thereon a digital 3D printable item as disclosed herein.

In another aspect, a device for additive manufacturing of a three-dimensional object from powdered material comprises an irradiation system such as a laser system including a laser source and a laser scanning optic, an object forming chamber with a powder handling system, and a control unit. The control unit is configured to control the device to perform the method as disclosed herein and in particular to perform the additive manufacturing based on a digital 3D printable item as disclosed herein.

Further embodiments of the above aspects, are disclosed in the claims, which are incorporated herein by reference.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic side view of a three-dimensional object for illustrating the irradiation principles of layer based additive manufacturing;
Fig. 2 is a schematic view of an exemplary additive manufacturing device;
Fig. 3 is a side view of a layer structure for illustrating the adjustment of energy densities within down-skin micro-regions for a varyingly sloped surface;
Fig. 4 is a side view of a layer structure for illustrating the adjustment of energy densities within down-skin micro-regions for a constant slope surface;
Fig. 5 is a schematic top view of two layers illustrating the identification of down-skin micro-regions and their slope;
Figs. 6 to 8 illustrate schematic projections of down-skin micro-regions illustrating the approximation of slope values;
Fig. 9 is a flow chart illustrating the concept of slope considering formation of overhang layers; and
Fig. 10 is a schematic side view of a three-dimensional object for illustrating the density structure in particular of an overhang portion.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The disclosure is based in part on the realization that providing an overhang portion of a three-dimensional object with a specifically modified material structure at the initial down-skin regions may allow strengthening and stabilizing of the manufacturing process. In particular, it was realized that adapting the manufacturing process in dependence of the underlying slope associated with the down-skin surface of the overhang portion may result in an improved structure.

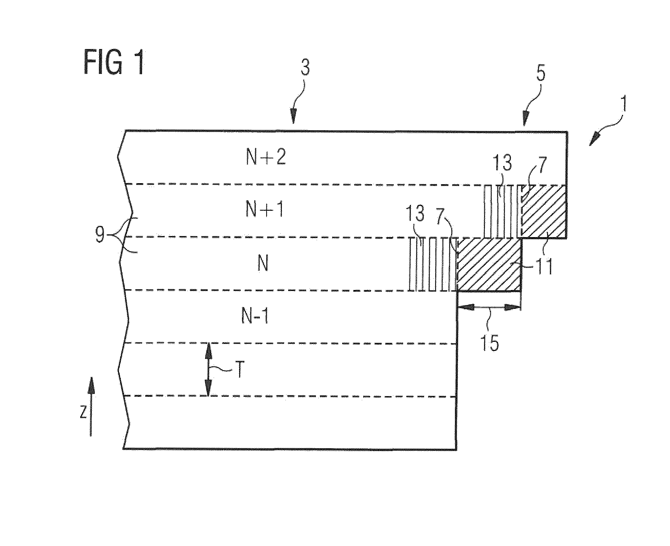

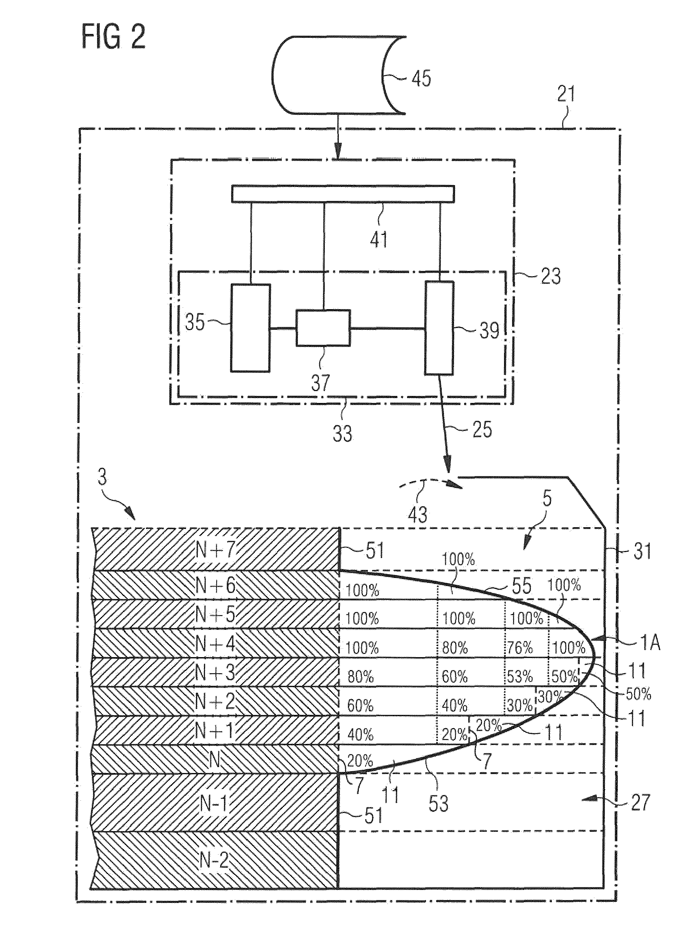

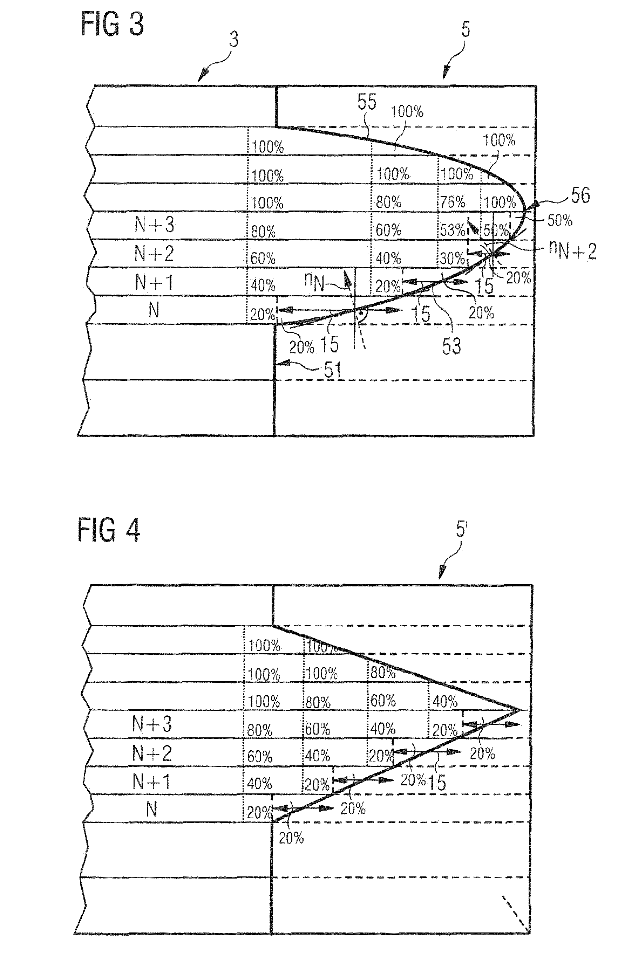

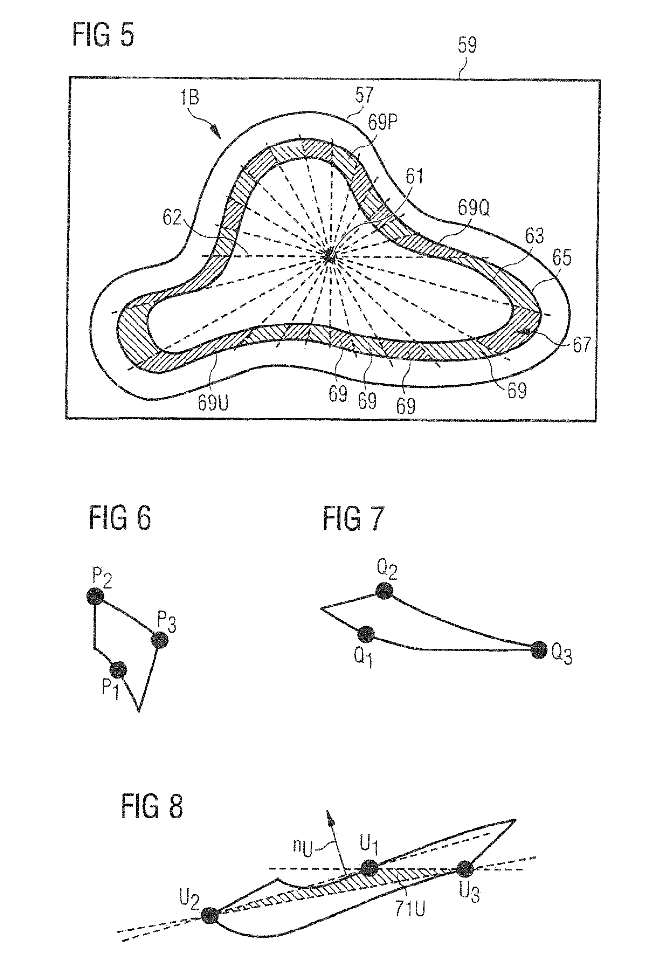

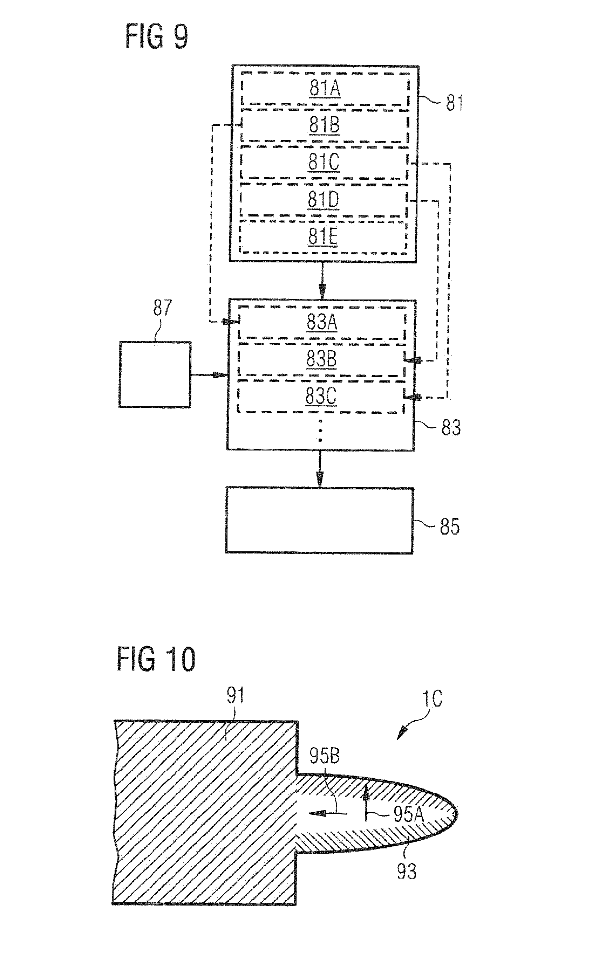

In the following, a 3D object, specifically a portion thereof, for being generated by layer based additive manufacturing is described in connection with Fig. 1. A respective additive manufacturing device is described in connection with Fig. 2. In connection with Figs. 3 and 4, exemplary energy density distributions within an overhang region for additive manufacturing are described. In connection with Figs. 5 to 8, the identification of approximated slope parameters associated with down-skin micro-regions is explained. Fig. 9 is an exemplary flow chart describing additive manufacturing based on the herein disclosed concepts and Fig. 10 illustrates a resulting three-dimensional object and its specific density structure.

Referring to Fig. 1, a three-dimensional object 1 comprises a core portion 3 and an overhang portion 5. Within three-dimensional object 1, a layer structure with six layers is schematically indicated. In Fig. 1, the Z-direction represents the layer providing direction. In general, the layers extend within a layer plane, e.g. X-Y-plane. A thickness T of the layers is assumed to be identical for the plurality of layers that are schematically indicated for three-dimensional object 1. In general, the thicknesses may vary (see also Fig. 3).

The layer structure comprises, from the bottom, three layers, the last of the three being referenced in Fig. 1 explicitly as N-1. Each of those three layers consists exemplarily only of a core region 9, wherein herein a core region of a layer is understood as being built on top of a previously irradiated region. In core portion 3, those core regions 9 lay essentially one on top of the other, thereby providing a constant boundary condition for the irradiation and formation of three-dimensional object 1.

On top of layer N-1, a set of two overhang layers N, N+1 are indicated. For each of overhang layers N, N+1, a dashed line indicates a transition 7 from a region of that layer being built on top of a previously irradiated region, i.e. a respective core region 9 of that layer, and a region built on top of a region that was previously not irradiated, herein those regions are referred to as down-skin regions 11. Herein, that portion of a core region that extends next to transition 7 is referred to as a transition region 13. Thus, transition region 13 extends on top of and up to the boarder of an underlying irradiated region. Again, within core region 9 and thus also transition region 13, constant boundary conditions for the irradiation and formation of three-dimensional object 1 are essentially given, while down-skin region 11 is formed on top of non-irradiated powder and, thus, is subject to different boundary conditions for the irradiation and formation.

On top of overhang layer N+1, another layer N+2 with only a respective pure core region forms the top side of three-dimensional object 1, i.e. layer N+2 extends only above the previously radiated region of layer N+1.

In general, the core of the object may be melted with maximum laser power. For example, core region 9 is irradiated with an energy density that allows for a complete and solid melting of the underlying powdered material resulting in a, for the powdered material typical, material density of the respective core portion.

In the concepts disclosed herein, energy densities provided into down-skin regions 11, and in some embodiments into transition regions 13, deviate from the energy density provided into the core region 9. Thereby, down-skin regions 11 are characterized by a specific structural feature that depends on the reduced energy introduced into the powder. As will be obvious to the skilled person, the down-skin regions 11, which are not supported by some previously irradiated region, may be subject to processing effects that act onto the irradiated and at least partly melted powdered material. Those effects may, for a non-adapted irradiation, result in a structural undesired shape of the overhang surface side that is the bottom side of overhang portion 5 when looked at in the direction of the layer providing direction.

As described in the following, the change in the provided energy density may depend, in particular, on the extent that a respective down-skin region 11 extends beyond an associated core region 9 of a preceding underlying layer.

In Fig. 1, the extent 15 of layer N is schematically indicated by a double arrow. Exemplarily, down-skin region 11 of layer N extends about twice as far beyond core region 9 (transition 7) of layer N-1 than down-skin region 11 of layer N+1 extends beyond transition 7 of layer N, delimiting the supporting irradiated region of layer N.

It is noted that the above-identified layers and their associated regions may be presented in an object layer data such as an extended CAD representation, of three-dimensional object 1.

Referring to Fig. 2, a device 21 for additive manufacturing of a three-dimensional object, such as three-dimensional object 1 of Fig. 1, from powdered material is schematically shown.

Device 21 includes a radiation source 23 for providing a light beam 25 to interact with a powdered material 27 provided layer by layer within a powder bed 31.

Radiation source 23 comprises, for example, a laser system 33 with a pump laser 35, a resonator 37, and a scanning optic 39.

The respective components of laser system 33 as well as the providing of layers of powder may be controlled by a control unit 41. Using the inputs from sensors, the controller may be configured to, for example, adjust the scanning speed or the (e.g. laser) power until the desired energy density is accumulated within an irradiated region.

In general, the control unit may be a single microprocessor or plural microprocessors that may include means for controlling, among others, an operation of radiation source 35 or scanning optic 39 as well the powder distribution and lowering of the position of the already generated portion of the three-dimensional object. Control unit may include known components required to run an irradiation application such as, for example, a memory, a storage device, and a processor such as a central processing unit or any other means known in the art for controlling device 21 for additive manufacturing.

Various other known circuits may be associated with control unit 41, including power supply circuitry, signal-conditioning circuitry, communication circuitry, and other appropriate circuitry. Control unit 41 may analyze and compare received and stored data, and, based on instructions and data stored in memory or input by a user, determine what type of action is required. For example, control unit 41 may compare received values with target values stored in memory, and based on the results of the comparison, the controller may transmit signals to one or more components to alter the deposited energy density.

Control unit 41 may include any memory device known in the art for storing data relating to operation of device 21 for additive manufacturing and its components. The data may be stored in the form of one or more maps such as CAD files or adapted CAD files. An example is the digital 3D printable item disclosed herein that describes and/or relates 3D data (for example 3D data points) to specific operation and/or irradiation parameters. Each of the maps and data items may be in the form of tables, graphs, and/or equations, and include a compilation of data. Control unit 41 may reference those maps and items and control the operation of one component in response to the desired operation of another component. For example, control unit 41 may provide a specific scan pattern 43 of beam 25 over a top layer of powder 27, thereby irradiating the powdered material to form a desired solid object.

As schematically illustrated in Fig. 2, control unit 41 controls the performing of the scanning process based on a digital 3D printable item 45. Herein, a digital printable item is an item for being processed by a 3D manufacturing device such as device 21. It may be stored locally or decentrally on one or more storage devices. It includes the basis definition of the shape of the three-dimensional object 1, e.g. by a data set representing a 3D structure of three-dimensional object 1, as well as information on the to be processed layer structure. Such information may comprise a layer thickness, an extension and position of core regions, transition regions, and down-skin regions. In addition, digital 3D printable item 45 includes energy density parameters associated with the data set/data points and the specific layer structure and, in particular the specific layer providing direction.

Energy density parameters are configured for enabling the setting of an irradiated energy density during operation of 3D manufacturing device 21. Energy density parameters comprise core energy density parameters for those data points of the data set that are associated with core region 9 of, in particular, an overhang layer. Energy density parameters further comprise overhang energy density parameters for those data points of the data set that are associated with down-skin regions 11 of overhang layers. Accordingly, digital 3D printable item represents, for example, an extended CAD data set.

In accordance with the herein disclosed concepts, overhang energy density parameters for a specific data point of a down-skin region depend on extent 15 of an associated respective down-skin micro-region (see also Figs. 5 to 8). In particular, overhang energy density parameters depend on a slope value that can be associated with the respective down-skin micro-region as will be described herein. In other words, digital 3D printable item 45 represents, for example, a (3D) laser irradiation map for a laser based 3D additive manufacturing device such as device 21.

In addition, Fig. 2 shows schematically a manufactured three-dimensional object 1A. In the object's embodiment of Fig. 2, a layer sequence with a modified layer thickness is indicated as the layer thickness varied during manufacturing of overhang portion 5, for example, in line with known adaptive slicing techniques.

A left side of object 1A shown in Fig. 2 represents core portion 3. As disclosed in connection with Fig. 1, core portion 3 has been manufactured, for example, with energy densities that result in an essentially complete melting of powdered material 27. Exemplarily, core portion 3 includes all layers and extends laterally up to an outer side surface 51 of object 1A. Outer side surface 51 is indicated schematically as delimiting layers N-1, N-2, and N+7 with respect to the right side of the drawings (e.g. in X-direction). Exemplarily, core portion 3 has been manufactured with a, for example, maximum core portion energy density, herein referred to as 100%, that is irradiated constantly within core portion 3.

An assumed extension of outer side surface 51 into intermediate layers N to N+6 is illustrated by a dashed line delimiting the shaded left side of object 1A. The dashed line splits those intermediate layers in sections that completely relate to core portion 3 and to sections that relate to overhang portion 5.

In general, overhang portion 5 includes - in the Z-direction - a bottom side 53 and a top side 55. Any one of the intermediate layers may extend along (at least partly along) those sides or may end into those sides and, thus, may have sections without a layer being on top or below of it (such as down-skin regions 11).

For overhang portion 5, down-skin regions 11 are indicated for layers N, N+1, N+2, and N+3. Accordingly, those layers comprise sections that are irradiated but are not on top (in Z-direction) of a previously irradiated region. In Fig. 2, transitions 7 for those layers are again indicated by dashed lines. At the core portion side of transition 7, the core region of the respective layer is given, as that core region is on top of a previously irradiated region. Thus, for the layers of overhang portion 5, core regions may extend beyond outer surface side 51.

For respective sections within overhang portion 5, energy density values are indicated in Fig. 2 as percentage values with respect to the core energy density. In line with the herein disclosed concepts, those down-skin regions, which extend over a larger extent in lateral direction, are associated with lower energy density irradiation, i.e. are based on a larger down-skin reduction with respect to the core energy density.

Exemplarily in Fig. 2, down-skin regions 11 of layer N and of layer N+1 is irradiated with 20% of the core energy density, while ("smaller") down-skin region 11 of layer N+2 is irradiated with 30% of the core energy density and ("even more smaller") down-skin region 11 of layer N+3 is irradiated with 50% of the core energy density.

As further illustrated in Fig. 2, within a layer, the energy density increases from down-skin region 11 towards core portion 3 in a specific manner. For example, layer N+1 comprises a section of an energy density of 40% of the core energy density as well as a section of 20% of the core energy density.

As further illustrated, the energy density provided to the various layers may increase in Z-direction until, at top surface 55 of overhang portion 5, the maximum core energy density may be provided. Accordingly, overhang portion 5 is generated with a varying energy density in Z-direction resulting in a specific structure due to, for example, a partially incomplete melting of powder 27 at bottom side 53.

In other words as exemplary shown for the embodiment of Fig. 2, up to surface 51, core portion 3 may comprise completely melted/sintered material, while overhang portion 5, when looked at from bottom side 53, i.e. in Z-direction, comprises only partly melted/sintered material, and overhang portion 5, when looked at from top side 55, i.e. against Z-direction, comprises again completely melted/sintered material.

Fig. 3 illustrates for a 3D shape, similar to Fig. 2, a modified energy density distribution in the range between core portion 3 and overhang portion 5. Specifically, it is shown that, with respect to inner side 51, the sequence of overhang layers N, N+1, N+2, N+3 were manufactured with reduced energy densities also at the left (i.e. at the core portion side) of inner side 51. Thereby, a structural bridge (with a similar structure than that at down-skin regions 11) may extend into core portion 3.

In addition, Fig. 3 indicates - for each of overhang layers N, N+1, N+2, N+3 - lateral extents 15 of associated down-skin micro-regions as will be discussed below. A down-skin micro-region 69 is a portion of down-skin region 11 that will be treated within the slope analysis as a single unit and extends, for example over a range of 0.5 mm to 10 mm, depending on the desired process quality in the down skin areas; that, in turn, means that the number of rays 62 (see fig. 5) used to subdivide the down skin regions 11 may depend on the desired extent of the micro-regions and on the overall size of the part.

As in Fig. 2, bottom side 53 and top side 55 are schematically indicated. Along bottom side 53, the slope, which is based on the lateral extent of the down-skin micro-region beyond the irradiated region as well as the layer thickness, increases from the left to the right, i.e. from inner side 51 towards a furthest overhang position 56. The slope may be defined, for example, by a plane approximating the down-skin micro-region as described in connection with Figs. 5 to 8. Exemplarily, respective normal vectors n_{N}, n_{N+2} of planes approximating the down-skin micro-regions for layers N and N+2 are indicated in Fig. 3. As one can see, the angle of the normal vectors with respect to the Z-direction increases with increasing slope i.e. from layer N to layer N+2.

It is noted that in Figs. 2 and 3 the percentage values of the core energy density are provided for illustration purposes only. They may depend on the type of radiation and the type of powder - and in general the type of 3D manufacturing process - and thus, they may be selected, for example, such that for the down-skin region an increased stiffness is provided that avoids or at least reduces a respective deformation during the manufacturing process.

In Fig. 4, an overhang portion 5' is illustrated having a constant slope, e.g. a constant extent 15 for a constant layer thickness. Accordingly, the slope depending overhang energy density provided for the down-skin regions is illustrated to be 20% of the maximum core energy density for each overhang layer N, N+1, N+2, N+3.

For a single three-dimensional object, various overhang portions 5' may be provided with different slopes, wherein different slopes result in different slope depending overhang energy densities used for manufacturing in those portions. Accordingly, the control unit of the respective additive manufacturing device will associate varying energy densities for overhang regions with varying slope parameters.

Fig. 5 illustrates an exemplary approach for determining a down-skin region and for dividing the same into down-skin micro-regions. Based on such an identification of down-skin micro-regions, respective slope values may be derived and associated with respective down-skin micro-regions based on a 3D data set representing a three-dimensional object. The slope values then affect the selected energy density.

In Fig. 5's top view, a three-dimensional object 1B is delimited by a global part silhouette 57 that is smaller in size than a respective wall 59 of powder bed 31. Specifically, Fig. 5 identifies a centroid 61. Centroid 61 may be a global part centroid that refers to the complete part to be produced or a local centroid for, e.g. a respective portion of a layer delimited by closed boundary of global part silhouette 57.

In Fig. 5, a previous layer contour 63 and a current layer contour 65 represent the boundaries of the respective layers. In between previous layer contour 63 and current layer contour 65, respective down-skin areas 67 are formed.

In a top view onto those two layers, rays starting from centroid 61, for example at a regular angular spread, divide down-skin area 67 into a sequence of down-skin micro-regions 69.

As explained in connection with Figs. 6 to 8, approximated tangent planes can be calculated, respectively, for down-skin micro-regions 69.

In Figs. 6 to 8, down-skin micro-regions 69P, 69Q, 69U are illustrated. For each down-skin micro-region, three points are identified for approximating a tangential plane. The first point P1, Q1, U1 is selected, for example, as a center point of the respective section of previous layer contour 63. The second two points P2, P3 - Q2, Q3 - U2, U3 are selected, for example, to be the intersections of the radial rays originating from centroid 61 when crossing current layer contour 65.

Knowing the layer thickness of the current layer, those three points define a plane being tilted with respect to the layer plane at a given slope angle. A respective approximation plane 71U is indicated in Fig. 8 for down-skin micro-region 69U together with a respective normal vector n_{U}. In particular, the slope angle may be given by the angle from the normal of the approximated plane to the layer providing direction Z. For a respective down-skin micro-region, the slope angle of that plane with respect to the layer plane may be selected to determine the adaptation of the energy density. In other words, the down-skin reduction of the energy density with respect to the core energy density may increase with decreasing slope.

Summarizing the procedure in connection with Figs. 6 to 8, the down-skin area (down-skin region) may be obtained by subtracting the region of a directly preceding layer from the current layer. The resulting region is herein referred to as the down-skin region. That region is divided into small zones referred to herein as down-skin micro-regions. The division into those down-skin micro-regions may be performed step-wise by, for example, ray tracing originating from a centroid of the object. The centroid may be, for example, the center of the bounding box of the whole object or of the respective layer. The down-skin micro-regions are then assigned with different energy density values for manufacturing, e.g. different laser power values or laser scanning speeds, wherein those values are based on the slope angle that the approximated tangent plane forms with the layer plane (ground plane). As explained above, the approximated tangent plane for each of the down-skin micro-regions may be calculated using three points, one coming from the contour generated by the immediately preceded layer, and two points coming from the contour generated by the current layer.

In the following layers, sections on top of those down-skin micro-regions will be irradiated with growing energy densities (e.g. laser powers) until 100% of a set point, e.g. the maximum energy density of the respective layer is reached.

In an alternative embodiment, the slope may be determined, for example, based on the maximum extent in, e.g., radial direction from the centroid in combination with the layer thickness. Alternative approximations of the slope parameter of respective down-skin micro-regions will be apparent to the skilled person.

As indicated by the exemplary values in Figs. 2 and 3, the adaptation of the energy densities may be performed step-wise. In some embodiments, the adaptation of the energy densities may be performed continuously. For example, the adaptation may follow the change of the slope for a respectively performed scanning pattern.

In general, the energy density is one of the parameters defining the 3D manufacturing process. The energy density is, in particular, proportional to the power provided by the laser beam to the powder bed and is inverse proportional to the product of the scanning speed and essentially the diameter of the beam 25. Accordingly, the energy density may be adapted by modifying the power provided by the radiation source, the extent of beam 25, the scanning speed of the beam, the distance between scanning lines and/or the strategy used for the hatching, as well as a combination of some or all of those parameters.

As will be apparent to the skilled person, the respective energy densities are properties of, for example, the type of radiation and the type of the powder used for the 3D manufacturing process. Generally, a reduced energy density can create a melted volume with more porosity. In the case of a down-skin region, using properly calibrated low energy may avoid a deep penetration of the laser, so it is possible to obtain a surface that may be better with respect to the original shape, with less roughness, as well as that may avoid irregular lumps of fused powder which could compromise the subsequent layers.

Fig. 9 illustrates a flow chart of a three-dimensional processing based on the herein disclosed concepts. The concepts use the adaptation of irradiation for the generative manufacturing of objects in, in particular, laser based 3D additive manufacturing devices.

Generally, the manufacturing is divided in a planning phase 81, a configuration phase 83, and a manufacturing phase 85.

During planning phase 81, the geometry and structure of the to be manufactured object is defined. For example, a 3D data set of the object may be provided (step 81A). Based on a selected layer providing direction (Z-direction), core regions may be identified (step 81B) as well as down-skin regions (step 81C). In some embodiments, the identification of transition regions (step 81D) and the determination of the extent into the object's core portion may also take place.

Based on the identified down-skin region, down-skin micro-regions may be defined and respective slope parameters may be associated with the defined down-skin micro-regions (step 81E).

The result of planning phase 81 may be essentially a portion of a digital 3D-printable item as discussed above.

In configuration phase 83, based on the results of the planning phase 81 and under consideration of machine specific parameters 87 of the respective 3D-manufacturing device, energy densities are defined for the core regions (step 83A), the down-skin micro-regions (step 83B), and - in some embodiments - the transition regions (step 83C). The energy densities require respective power values for the radiation source, beam diameters e.g. for the scanning optics, scanning velocities, scanning path overlaps, etc. As a result, a scanning procedure will be defined, e.g. in form of a digital 3D-printable item.

In manufacturing phase 85, 3D-manufacturing device is operated in line with the defined scanning procedure, thereby generating a three-dimensional object.

Fig. 10 schematically illustrates the density distribution of the created material structure in view of the herein disclosed concepts. Specifically, within a main core portion 3, an essentially constant core portion density of the material structure exists. This is indicated in Fig. 10 as a region of high core density 91.

For the overhang portion, the down-skin material structure at an overhang side has a density that is decreased with respect to the core portion density but increases in direction from the overhang side to the top side. This is indicated in Fig. 10 as a region of low density 93 at down-skin regions as well as arrow 95A that indicates the increase of densities. In addition, in lateral direction, the density of the material structure within the overhang may increase towards the main core portion at least for those layers being overhang layers as indicated by arrow 95B. In some embodiments, the increase of the density of the material structure up to the maximum core density will extend into the main core portion as discussed above.

Accordingly, a structural analysis of a three-dimensional object generated by the herein disclosed concepts may show a less dense (e.g. due to partly melted powder corns) density at least in the down-skin regions of the overhang portion together with an increase of the density of the structure towards the top side of the overhang portion as well as towards the main core portion for the overhang layers.

In some configurations, a maximum density may be provided at the top side while in light of the increasing density feature, a zone of reduced densities may be formed within the layers of the overhang portion on top of the overhang layers (see Fig. 2).

In some embodiments of the herein disclosed concepts, the laser power provided to and absorbed by the powder is reduced in at least one layer of an overhang. This may be achieved, for example, by an increased scanning speed or a reduced laser power. Thereby, the powder may only be partly melted but not completely melted. Thereafter, the applied laser power is increased for the thereafter-following layers successively on top of those reduced overhang layer sections.

As indicated above, the applied energy density close to the contour of the three-dimensional object in the overhang region may be largely reduced at least in the first overhang layer within the down-skin region.

The herein mentioned adaptive slicing is known in the art, to manufacture an object that essentially extends in vertical direction by using thicker powder layers, while a curvature of an object is closely followed by a reduced thickness of layers. The latter allows to reduce the deviation from an actual contour from a desired contour.

In some embodiments, the herein disclosed concepts divide down-skin areas in small zones, called "down-skin micro-regions" (Fig. 5). The division may be done step-wise by means of rays starting from a centroid of the part. The down-skin micro-regions may be assigned to different power level thresholds, based on the angle that the tangent plane forms with the ground plane. In the following (upper) layers, the zones on top of these micro-regions will be irradiated with growing laser power, to reach the 100% of the set point. The tangent plane in the down-skin micro-regions may be calculated using three points: one coming from the contour generated by the previous layer, two coming from the contour generated by the current layer (Fig. 5).

It is noted that herein it is referred exemplarily to "partly" melted or "completely" melted when adjusting the 3D manufacturing process. However, the skilled person understands that the same may relate only to those constituents and portions of the powder and powder grains that are considered and configured for processing the respective type of additive manufacturing such as the respective radiation.

The disclosed concepts offer an automatic way of solving a problem that otherwise may involve a lot of manual trial-and-error sessions.

Finally, examples of additive manufacturing machines in which the herein disclosed concepts can be applied include selective laser sintering or selective laser melting machines such as the "mysint100" manufactured by TRUMPF SISMA und TRUMPF. The manufacturing of metal or ceramic based elements in line with the herein disclosed concepts may find applications in various technical fields such as in medical, dental, aerospace, and automobile applications.

Although the preferred embodiments of this invention have been described herein, improvements and modifications may be incorporated without departing from the scope of the following claims.

## Claims

1. A method for radiation based additive manufacturing of a three-dimensional object (1) from powdered material (27), wherein a plurality of layers (N-1, N, N+1, N+2) of the powdered material (27) are provided in a layer providing direction (Z) and are irradiated layer by layer, and the plurality of layers (N-1, N, N+1, N+2) comprises an overhang layer (N, N+1, N+2) with a core region (9) and a down-skin region (11) for forming a core portion (3) and an overhang portion (5) of the manufactured three-dimensional object (1), respectively, the core region (9) extending in the layer providing direction (Z) on top of an irradiated region of a directly preceding layer (N-1, N, N+1) and the down-skin region (11) extending on top of a previously non-irradiated region of the directly preceding layer (N-1, N, N+1), the method comprising:
generating the directly preceding layer (N-1, N, N+1) of the overhang layer (N, N+1, N+2); and
generating the overhang layer (N, N+1, N+2) by providing a core energy density into the core region (9) at least up to a preset distance from a transition (7) to the down-skin region (11), and providing a slope depending overhang energy density into down-skin micro-regions (69) of the down-skin region (11),
wherein the slope depending overhang energy density differs from the core energy density by a down-skin reduction that depends on an extent (15) of the respective down-skin micro-region beyond the respective core region (9) of the directly preceding layer (N-1, N, N+1).

2. The method of claim 1, further comprising:
varying at least one of an irradiation power, a scanning speed, and/or an irradiation spot size between irradiating a core region (9) and a down-skin region (11), and in particular by reducing an irradiation power and/or increasing a scanning speed and/or increasing an irradiation spot size, when transitioning during the scanning from the core region (9) to the down-skin region (11), thereby implementing the down-skin reduction.

3. The method of claim 1 or claim 2, wherein the slope depending overhang power further depends on the layer thickness (T), and in particular from a surface slope associated with each of the down-skin micro-regions (69), and
wherein in particular a surface slope associated with a respective down-skin micro-region (69) is derived from data points defining the shape of the three-dimensional object (1) such as by determining a lateral extension (15), and/or by determining a plane approximating the shape of the three-dimensional object (1) at the down-skin micro-region (69) in particular based on one point on the surface between the directly preceding layer (N-1, N, N+1) and the overhang layer (N, N+1, N+2), and two points between the overhang layer (N, N+1, N+2) and the directly following layer (N+1, N+2).

4. The method of claim 3, wherein, for two down-skin micro-regions (69) of a larger and a smaller surface slope, the down-skin reduction of the overhang layer (N, N+1, N+2) being associated with the larger surface slope is smaller than the down-skin reduction of the overhang layer (N, N+1, N+2) being associated with the smaller surface slope such that the overhang layer (N, N+1, N+2) being associated with the smaller surface slope is provided with a smaller energy density, and
wherein in particular the down-skin micro-regions (69) relate to the same overhang layer (N, N+1, N+2) or to successive overhang layers (N, N+1, N+2) such as to overhang layers (N, N+1, N+2) of a common overhang portion (5).

5. The method of any one of the preceding claims, wherein the slope depending overhang energy density is in the range from about 10% to about 80% of a maximum layer specific core energy density.

6. The method of any one of the preceding claims, further comprising:
receiving slope parameters for the down-skin micro-regions (69); and
setting the slope depending overhang energy density in dependence of the slope parameter associated with the respective down-skin micro-region (69).

7. The method of any one of the preceding claims, wherein the core region (9) comprises a transition region (13) at the transition (7) to the respective down-skin micro-region (69), and the method further comprising:
irradiating the transition region (13) at a respective transition energy density being reduced with respect to the core energy density.

8. The method of claim 7, wherein the transition energy density is selected
to correspond close to the transition (7) to the slope depending overhang energy density, and/or
to be above the slope depending overhang energy density, and/or to decrease, in a lateral direction from the core region (9) towards the down-skin micro-region (69), continuously or step-wise from the core energy density at the core region (9) to the slope depending overhang energy density, and
wherein the transition (7) energy density is in particular in the range from about 20% to about 90% of a maximum core energy density.

9. The method of any one of the preceding claims, wherein the down-skin regions (11) of successive overhang layers (N, N+1, N+2) define an overhang contour (53) delimiting the overhang portion (5) of the manufactured three-dimensional object (1) in the layer providing direction (Z), and
within the overhang portion (5), the layer specific core energy density increases in the layer providing direction (Z) with distance from the overhang contour (53), and
wherein in particular the transition energy density increases in the layer providing direction (Z) with distance from the overhang contour (53).

10. A method for generating an irradiation instruction map (45) for additive manufacturing of a three-dimensional object (1) from powdered material (27) comprising an overhang portion (5), the method comprising:
determining a core region and a down-skin layer region of an object layer data corresponding to the three-dimensional object (1), the down-skin layer region comprising at least one down-skin micro-region (69);
determining an extent (15) of the down-skin micro-region (69) beyond the respective core region (9) of a directly preceding layer (N-1, N, N+1);
associating a core energy density to the core region (9); and
associating a slope depending overhang energy density to the down-skin micro-region (69) that differs from the core energy density by a down-skin reduction that depends on the extent (15) determined for the respective down-skin micro-region (69).

11. A three-dimensional object (1) formed from powdered material (27), the object (1) comprising:
a core portion (3) having a core material structure with a core density, in particular a core density in the range of completely processed such as melted/sintered powdered material (27), and
an overhang portion (5) comprising, at an overhang side (53), a down-skin material structure, wherein the down-skin material structure forms a surface of the three-dimensional object (1) at the overhang side and has a second density at the overhang side that is reduced with respect to the core density and changes with the slope of the overhang side.

12. The three-dimensional object (1) of claim 11, wherein the overhang portion (5) further comprises, at a top side (55) being opposite to the overhang side (53), a top-skin material structure with the core density.

13. A digital 3D printable item (45) for being processed by a 3D manufacturing device (21), the item comprising:
a data set representing a 3D structure of a three-dimensional object (1) to be formed from powdered material (27) layer by layer by the 3D manufacturing device (21) in a layer providing direction (Z); and
energy density parameters associated with the data set and the specific layer providing direction (Z) for setting an irradiated energy density of the 3D manufacturing device (21), the energy density parameters comprising
for data points of the data set that are associated with a core region (9) of an overhang layer (N, N+1, N+2), core energy density parameters; and
for data points of the data set that are associated with a down-skin region (11) of the overhang layer (N, N+1, N+2), slope depending overhang energy density parameters, wherein
the slope depending overhang energy density parameters correspond to a to be provided energy density that is reduced by a down-skin reduction in comparison to a core energy to be provided at data points having at least a preset distance from a transition (7) from the core region (9) to the down-skin region (11), wherein the down-skin reduction depends on an extent (15) of a respective down-skin micro-region (69) beyond a respective core region (9) of a directly preceding layer (N-1, N, N+1).

14. A computer-readable program product, having computer readable instructions stored thereon that, responsive to execution by a control unit (41) of a 3D manufacturing device (21), cause the 3D manufacturing device (21) to perform the method of any one of claim 1 to claim 10, and
wherein the computer-readable program product has in particular stored thereon a digital 3D printable item (45) of claim 13.

15. A device (21) for additive manufacturing of a three-dimensional object (1) from powdered material (27), the device (21) comprising:
an irradiation system such as a laser system (33) including a laser source (35) and a laser scanning optic (39);
an object forming chamber with a powder handling system; and
a control unit (41),
wherein the control unit (41) is configured to control the device (21) to perform the method of any one of claim 1 to claim 10 and in particular to perform the additive manufacturing based on a digital 3D printable item (45) of claim 13.

## Amended claims

### Amended claims in accordance with Rule 137(2) EPC.

1. A method for radiation based additive manufacturing of a three-dimensional object (1) from powdered material (27), wherein a plurality of layers (N-1, N, N+1, N+2) of the powdered material (27) are provided in a layer providing direction (Z) and are irradiated layer by layer, and the plurality of layers (N-1, N, N+1, N+2) comprises an overhang layer (N, N+1, N+2) with a core region (9) and a down-skin region (11) for forming a core portion (3) and an overhang portion (5) of the manufactured three-dimensional object (1), respectively, the core region (9) extending in the layer providing direction (Z) on top of an irradiated region of a directly preceding layer (N-1, N, N+1) and the down-skin region (11) extending on top of a previously non-irradiated region of the directly preceding layer (N-1, N, N+1), the method comprising:
generating the directly preceding layer (N-1, N, N+1) of the overhang layer (N, N+1, N+2); and
generating the overhang layer (N, N+1, N+2) by providing a core energy density into the core region (9) at least up to a preset distance from a transition (7) to the down-skin region (11), and providing a slope depending overhang energy density into a down-skin micro-region (69) of the down-skin region (11),
wherein the slope depending overhang energy density differs from the core energy density by a down-skin reduction that depends on an extent (15) of the respective down-skin micro-region (69) beyond the respective core region (9) on top of the directly preceding layer (N-1, N, N+1).

2. The method of claim 1, wherein the slope depending overhang energy density further depends on the layer thickness (T), and a surface slope associated with each of the down-skin micro-regions (69).

3. The method of claim 2, wherein the surface slope associated with a respective down-skin micro-region (69) is derived from data points defining the shape of the three-dimensional object (1) by determining the extent (15) of the respective down-skin micro-region (69), and/or by determining a plane approximating the shape of the three-dimensional object (1) at the down-skin micro-region (69) in particular based on one point on the surface between the directly preceding layer (N-1, N, N+1) and the overhang layer (N, N+1, N+2), and two points between the overhang layer (N, N+1, N+2) and the directly following layer (N+1, N+2).

4. The method of claim 2 or 3, wherein, for two down-skin micro-regions (69) of a larger and a smaller surface slope, the down-skin reduction of the overhang layer (N, N+1, N+2) being associated with the larger surface slope is smaller than the down-skin reduction of the overhang layer (N, N+1, N+2) being associated with the smaller surface slope such that the overhang layer (N, N+1, N+2) being associated with the smaller surface slope is provided with a smaller energy density, and
wherein in particular the down-skin micro-regions (69) relate to the same overhang layer (N, N+1, N+2) or to successive overhang layers (N, N+1, N+2) such as to overhang layers (N, N+1, N+2) of a common overhang portion (5).

5. The method of any one of the preceding claims, wherein the slope depending overhang energy density is in the range from about 10% to about 80% of a maximum layer specific core energy density, and/or
wherein the method further comprises:
varying at least one of an irradiation power, a scanning speed, and/or an irradiation spot size between irradiating a core region (9) and a down-skin region (11), and in particular by reducing an irradiation power and/or increasing a scanning speed and/or increasing an irradiation spot size, when transitioning during the scanning from the core region (9) to the down-skin region (11), thereby implementing the down-skin reduction.

6. The method of any one of the preceding claims, further comprising:
receiving slope parameters for the down-skin micro-regions (69); and
setting the slope depending overhang energy density in dependence of the slope parameter associated with the respective down-skin micro-region (69).

7. The method of any one of the preceding claims, wherein the core region (9) comprises a transition region (13) at the transition (7) to the respective down-skin micro-region (69), and the method further comprising:
irradiating the transition region (13) at a respective transition energy density being reduced with respect to the core energy density.

8. The method of claim 7, wherein the transition energy density is selected
to correspond close to the transition (7) to the slope depending overhang energy density, and/or
to be above the slope depending overhang energy density, and/or to decrease, in a lateral direction from the core region (9) towards the down-skin micro-region (69), continuously or step-wise from the core energy density at the core region (9) to the slope depending overhang energy density, and
wherein the transition (7) energy density is in particular in the range from about 20% to about 90% of a maximum core energy density.

9. The method of any one of the preceding claims, wherein the down-skin regions (11) of successive overhang layers (N, N+1, N+2) define an overhang contour (53) delimiting the overhang portion (5) of the manufactured three-dimensional object (1) in the layer providing direction (Z), and
within the overhang portion (5), the layer specific core energy density increases in the layer providing direction (Z) with distance from the overhang contour (53), and
wherein in particular the transition energy density increases in the layer providing direction (Z) with distance from the overhang contour (53).

10. A method for generating an irradiation instruction map (45) for additive manufacturing of a three-dimensional object (1) from powdered material (27) comprising an overhang portion (5), the method comprising:
determining a core region and a down-skin layer region of an object layer data corresponding to the three-dimensional object (1), the down-skin layer region comprising at least one down-skin micro-region (69);
determining an extent (15) of the down-skin micro-region (69) beyond the respective core region (9) on top of a directly preceding layer (N-1, N, N+1);
associating a core energy density to the core region (9); and
associating a slope depending overhang energy density to the down-skin micro-region (69) that differs from the core energy density by a down-skin reduction that depends on the extent (15) determined for the respective down-skin micro-region (69).

11. A three-dimensional object (1) formed from powdered material (27), the object (1) comprising:
a core portion (3) having a core material structure with a core density, in particular a core density in the range of completely processed such as melted/sintered powdered material (27), and
an overhang portion (5) comprising, at an overhang side (53), a down-skin material structure, wherein the down-skin material structure forms a surface of the three-dimensional object (1) at the overhang side and has a second density at the overhang side that is reduced with respect to the core density and changes with the slope of the overhang side.

12. The three-dimensional object (1) of claim 11, wherein the overhang portion (5) further comprises, at a top side (55) being opposite to the overhang side (53), a top-skin material structure with the core density.

13. A digital 3D printable item (45) for being processed by a 3D manufacturing device (21), the item comprising:
a data set representing a 3D structure of a three-dimensional object (1) to be formed from powdered material (27) layer by layer by the 3D manufacturing device (21) in a layer providing direction (Z); and
energy density parameters associated with the data set and the specific layer providing direction (Z) for setting an irradiated energy density of the 3D manufacturing device (21), the energy density parameters comprising
for data points of the data set that are associated with a core region (9) of an overhang layer (N, N+1, N+2), core energy density parameters; and
for data points of the data set that are associated with a down-skin region (11) of the overhang layer (N, N+1, N+2), slope depending overhang energy density parameters, wherein
the slope depending overhang energy density parameters correspond to a to be provided energy density that is reduced by a down-skin reduction in comparison to a core energy to be provided at data points having at least a preset distance from a transition (7) from the core region (9) to the down-skin region (11), wherein the down-skin reduction depends on an extent (15) of a respective down-skin micro-region (69) of the down-skin region (11) beyond a respective core region (9) on top of a directly preceding layer (N-1, N, N+1).

14. A computer-readable program product, having computer readable instructions stored thereon that, responsive to execution by a control unit (41) of a 3D manufacturing device (21), cause the 3D manufacturing device (21) to perform the method of any one of claim 1 to claim 10, and
wherein the computer-readable program product has in particular stored thereon a digital 3D printable item (45) of claim 13.

15. A device (21) for additive manufacturing of a three-dimensional object (1) from powdered material (27), the device (21) comprising:
an irradiation system such as a laser system (33) including a laser source (35) and a laser scanning optic (39);
an object forming chamber with a powder handling system; and
a control unit (41),
wherein the control unit (41) is configured to control the device (21) to perform the method of any one of claim 1 to claim 10 and in particular to perform the additive manufacturing based on a digital 3D printable item (45) of claim 13.
